# EUROPEAN PATENT SPECIFICATION

(11) **EP 3 477 475 B1**
(45) Date of publication and mention of the grant of the patent: **24.08.2022**
(21) Application number: 17819261.3
(22) Date of filing: 28.06.2017
(51) Int. Cl.: G06F 9/54

(54) **CONTENT PROCESSING METHOD AND MOBILE TERMINAL**
INHALTSVERARBEITUNGSVERFAHREN UND MOBILES ENDGERÄT
PROCÉDÉ DE TRAITEMENT DE CONTENU ET TERMINAL MOBILE

(30) Priority: 28.06.2016 CN 201610503062
(43) Date of publication of application: 01.05.2019
(73) Proprietor: Vivo Mobile Communication Co., Ltd., Dongguan, Guangdong 523860 (CN)
(72) Inventor: SHEN, Zhiyuan, Dongguan Guangdong 523860 (CN)
(74) Representative: Conti, Marco
(86) International application number: PCT/CN2017/090505
(87) International publication number: WO 2018/001264

(56) References cited:
- CN-A- 102 819 456
- CN-A- 104 657 038
- CN-A- 106 201 741
- US-A1- 2014 157 168
- US-A1- 2015 012 862
- US-B2- 9 275 025

## Description

### TECHNICAL FIELD

The present disclosure relates to the field of communication technology, in particular to a content processing method and a mobile terminal.

### BACKGROUND

Currently, most of smart mobile terminals support a copy-and-paste function. Based on this function, a user may copy and paste, or cut and paste, content such as a text (or the content in any other form) onto a target position of the mobile terminal. The content to be copied and pasted, or cut and pasted, by the user is called as to-be-processed content. Through the copy-and-paste function or cut-and-paste function provided by the mobile terminal, it is unnecessary for the user to perform a manual input operation.

For the copy-and-paste function or cut-and-paste function provided in the mobile terminal of related art, after the to-be-processed content has been copied or cut by the user, the to-be-processed content may be pasted to the target position of the mobile terminal by the user through clicking a paste button at the target position. However, it is found that, the to-be-processed content is invisible during the paste operation, so the user is capable of determining whether the to-be-processed content is what the user really needs merely after the to-be-processed content has been pasted to the target position. When it is not the content that the user really needs, the user needs to delete the to-be-processed content and then performs the copy-and-paste operation or the cut-and-paste operation again, and thereby the user experience is adversely affected. A document US 2014/157168 A1 provides methods and systems for an improved copy and paste experience. US 2015/012862 A1 discloses a content pasting instruction with a preview window.

### SUMMARY

The present disclosure has solved the afore-described problem as defined in the attached claims. An object of the present disclosure is to provide a content processing method and a mobile terminal, so as to solve the problem in the related art where the user experience of the mobile terminal is adversely affected when the copy-and-paste operation or cut-and-paste operation is performed repeatedly on the to-be-processed content.

In one aspect, the present disclosure provides in some embodiments a content processing method for use in a mobile terminal according to claim 1.

In another aspect, the present disclosure provides in some embodiments a mobile terminal according to claim 3. instruction.

According to the embodiments of the present disclosure, after the user has selected the to-be-processed content and transmitted the content processing instruction about the to-be-processed content, the first content pasting instruction is received through the second interface from the user, and the floating window is displayed in accordance with the first content pasting instruction, so as to display the to-be-processed content in the floating window. As a result, the user may preview the to-be-processed content in the floating window, so as to determine whether to paste the to-be-processed content. Because the user is capable of previewing the to-be-processed content in the floating window, it is able for the user to firstly determine whether the to-be-processed content is the content that the user really needs according to the to-be-processed content being displayed, which ensures that the to-be-processed content to be pasted meets the user's requirement, and prevent the user from deleting the to-be-processed content or performing an operation such as a copy-and-paste operation or cut-and-paste operation repeatedly on the to-be-processed content, thereby to improve the user experience of the mobile terminal.

### BRIEF DESCRIPTION OF THE DRAWINGS

In order to illustrate the technical solutions of the present disclosure in a clearer manner, the drawings desired for the present disclosure or the related art will be described hereinafter briefly. Obviously, the following drawings merely relate to some embodiments of the present disclosure, and based on these drawings, a person skilled in the art may obtain the other drawings without any creative effort.
Fig.1 is a flow chart of a content processing method according to some embodiments of the present disclosure;
Fig.2 is a flow chart of another content processing method according to some embodiments of the present disclosure;
Fig.3-Fig.6 are schematic views showing interfaces of a mobile terminal according to some embodiments of the present disclosure;
Fig.7 is a schematic view showing the mobile terminal according to some embodiments of the present disclosure;
Fig.8 is another schematic view showing the mobile terminal according to some embodiments of the present disclosure;
Fig.9 is yet another schematic view showing the mobile terminal according to some embodiments of the present disclosure; and
Fig.10 is a schematic view showing the mobile terminal according to some embodiments of the present disclosure.

### DETAILED DESCRIPTION OF THE EMBODIMENTS

The present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

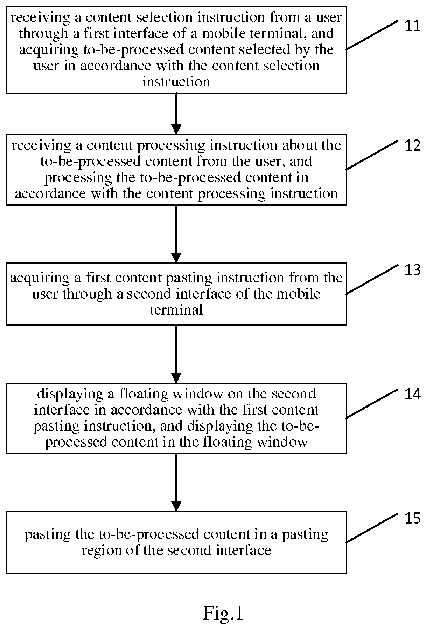

As shown in Fig.1, the present disclosure provides in some embodiments a content processing method for use in a mobile terminal, which includes in the following steps.

Step 11: receiving a content selection instruction from a user through a first interface of the mobile terminal, and acquiring to-be-processed content selected by the user in accordance with the content selection instruction.

In actual use, the user may perform such operations as browsing a web page and reading a novel through the mobile terminal. Taking the operation of browsing the web page as an example, an interface presented by the mobile terminal when the user is browsing a current web page is called as a first interface. The user may select content in the current web page on the first interface. At this time, the user may transmit the content selection instruction to the mobile terminal through pressing and holding, or double clicking, the content (e.g., text or pictures) in the current web page. The mobile terminal may analyze a region corresponding to the content selection instruction according to the content selection instruction, and acquire the text or pictures selected by the user, i.e., acquire the to-be-processed content.

Step 12: receiving a content processing instruction about the to-be-processed content from the user, and processing the to-be-processed content in accordance with the content processing instruction.

After the user has selected the to-be-processed content, such options as "copy", "collect", "share" and "cut" may be popped up on the first interface of the mobile terminal for the user's selection. Correspondingly, the content processing instruction includes such instructions as a copying instruction and a cutting instruction. When the content processing instruction is the copying instruction, the to-be-processed content may be copied in accordance with the content processing instruction, and when the content processing instruction is the cutting instruction, the to-be-processed content may be cut in accordance with the content processing instruction.

Step 13: acquiring a first content pasting instruction from the user through a second interface of the mobile terminal.

After the user has selected the to-be-processed content and transmitted the content processing instruction through the first interface, the user pastes the to-be-processed content to a target position of the mobile terminal, e.g. paste the to-be-processed content to a memo. At this time, the user may quit the first interface, open an application "memo", and select the target position where the to-be-processed content is to be pasted. An interface including the target position which is selected by the user and where the to-be-processed content is to be pasted is called as the second interface. For example, the second interface may be an interface where a log is newly created in the memo.

Like that in the related art, such options as "paste" may be displayed when the user presses and holds or clicks a whitespace in a pasting region on the second interface. In the embodiments of the present disclosure, a predetermined region on the second interface may refer to any region in the pasting region on the second interface. For example, the predetermined region may be a region corresponding to the option "paste", i.e., a region where the option "paste" is located in the pasting region of the second interface.

In actual use, the user may press, double-click, press and hold, or click the region where the option "paste" is located. In this step, an operation type of the user for the predetermined region of the second interface is acquired. Then, when the operation type is pressing, double-clicking or pressing and holding, a predetermined correspondence between the operation types and operation instructions may be look up, so as to determine the operation instruction corresponding to the operation type, e.g., pressing, double-clicking or pressing and holding, as the first content pasting instruction.

When a pressure applied by the user to the region where the option "paste" is located is greater than a first predetermined threshold, it may be deemed that a pressing operation has been made by the user on the region where the option "paste" is located. When the user has clicked the region where the option "paste" is located for more than two times within a first predetermined time period, it may be deemed that a double-clicking operation has been made by the user on the region where the option "paste" is located, otherwise it may be deemed that a clicking operation has been made by the user on the region where the option "paste" is located. When the user has clicked and holding the region where the option "paste" is located for a duration greater than a predetermined time threshold within a second predetermined time period, it may be deemed that a pressing-and-holding operation has been made by the user on the region where the option "paste" is located. The first predetermined threshold, the first predetermined time period, the second predetermined time period and the predetermined time threshold may be set with experience.

Different operation types may correspond to different operation instructions. Hence, the correspondence may be created as shown in Table 1.

**Table 1**

| Operation type | Operation instruction |
|---|---|
| Pressing, double-clicking or pressing-and-holding | First content pasting instruction |
| Clicking | Second content pasting instruction |

As shown in Table 1, in the embodiments of the present disclosure, when the pressing, or double-clicking or pressing-and-holding operation has been made by the user on the region where the option "paste" is located, it is deemed that the user has transmitted the first content pasting instruction to the mobile terminal through looking up the Table 1.

Step 14: displaying a floating window on the second interface in accordance with the first content pasting instruction, and displaying the to-be-processed content in the floating window.

After the user has transmitted the first content pasting instruction, the floating window is displayed on the second interface in accordance with the first content pasting instruction, and meanwhile the to-be-processed content is displayed in the floating window for the user's preview.

In addition, a pasting confirmation button and a close button are also displayed in the floating window or the second interface while displaying the to-be-processed content.

Step 15: pasting the to-be-processed content in a pasting region of the second interface.

In a possible embodiment of the present disclosure, a pasting prompt message may be transmitted to the user, so as to prompt the user of whether to paste the to-be-processed content. When a pasting prompt response message has been transmitted by the user to confirm that the to-be-processed content is to be pasted, the to-be-processed content may be pasted in the pasting region of the second interface.

In another possible embodiment of the present disclosure, when the user has clicked the pasting confirmation button in the floating window, it is deemed that the user has transmitted a pasting confirmation instruction to the mobile terminal. At this time, the to-be-processed content is pasted in the pasting region of the second interface in accordance with the pasting confirmation instruction.

According to the embodiments of the present disclosure, the user is capable of previewing the to-be-processed content in the floating window, so it is able for the user to firstly determine whether the to-be-processed content is the content that the user really needs according to the to-be-processed content being displayed, which ensures that the to-be-processed content to be pasted meets the user's requirement, and prevent the user from deleting the to-be-processed content or performing an operation such as a copy-and-paste operation or cut-and-paste operation repeatedly on the to-be-processed content, thereby to improve the user experience of the mobile terminal.

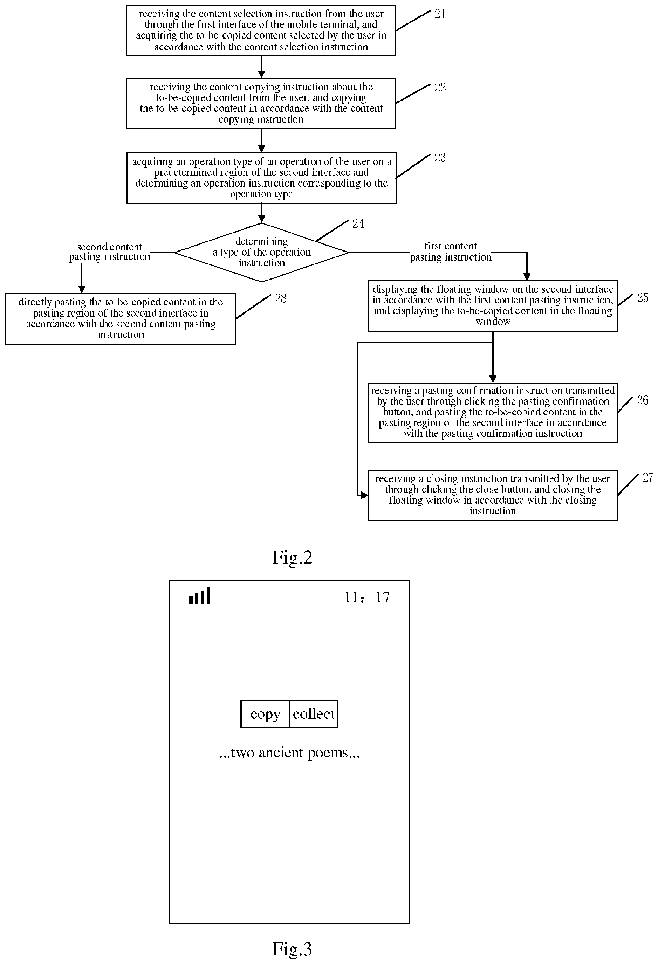

In some embodiments of the present disclosure, another content processing method may be described hereinafter in conjunction with Fig.2-Fig.6 when the content processing instruction is a content copying instruction. Corresponding, the to-be-processed content is to-be-copied content.

As shown in Fig.2, the content processing method for use in the mobile terminal includes the following steps.

Step 21: receiving the content selection instruction from the user through the first interface of the mobile terminal, and acquiring the to-be-copied content selected by the user in accordance with the content selection instruction. As shown in Fig.3, the to-be-copied content selected by the user includes words "two ancient poems".

Step 22: receiving the content copying instruction about the to-be-copied content from the user, and copying the to-be-copied content in accordance with the content copying instruction.

Step 23: acquiring an operation type of an operation of the user on a predetermined region of the second interface and determining an operation instruction corresponding to the operation type.

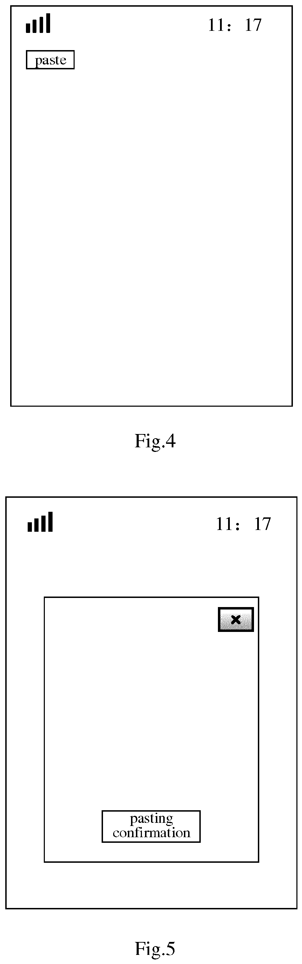

Like that in the related art, options such as the "paste" may be displayed when the user presses and holds, or clicks, a whitespace in the pasting region of the second interface (as shown in Fig.4). As mentioned hereinabove, the operation types of the user for the pasting region include pressing, clicking, double-clicking, and pressing-and-holding.

Through looking up the above Table 1, when the operation type of the user is clicking, it corresponds to a second content pasting instruction, and when the operation type of the user is pressing, double-clicking or pressing-and-holding, it corresponds to a first content pasting instruction.

Step 24: determining a type of the operation instruction, when the operation instruction is the first content pasting instruction, proceeding to step 25 to 27, and when the operation instruction is the second content pasting instruction, proceeding to step 28.

Step 25: displaying the floating window on the second interface in accordance with the first content pasting instruction, and displaying the to-be-copied content in the floating window (as shown in Fig.5).

In addition, a pasting confirmation button and a close button are also displayed in the floating window, as indicated by "×" in Fig.5.

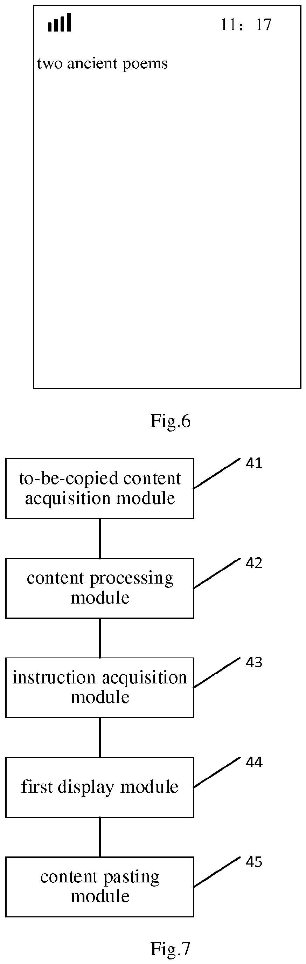

Step 26: when the user has clicked the pasting confirmation button, receiving a pasting confirmation instruction transmitted by the user through clicking the pasting confirmation button, and pasting the to-be-copied content in the pasting region of the second interface in accordance with the pasting confirmation instruction (as shown in Fig.6).

Step 27: when the user has clicked the close button, receiving a closing instruction transmitted by the user through clicking the close button, and closing the floating window in accordance with the closing instruction.

Step 28: directly pasting the to-be-copied content in the pasting region of the second interface in accordance with the second content pasting instruction.

According to the embodiments of the present disclosure, the user is capable of previewing the to-be-copied content in the floating window, so it is able for the user to firstly determine whether the to-be-processed content is the content that the user really needs according to the to-be-processed content being displayed, which ensures that the to-be-processed content to be pasted meets the user's requirement, and prevent the user from deleting the to-be-copied content or performing an operation such as a copy-and-paste operation or cut-and-paste operation repeatedly on the to-be-processed content, thereby to improve the user experience of the mobile terminal. In addition, the user may directly paste the to-be-copied content by clicking the paste button, so it is able to meet the user's operation habit in a better manner, thereby to further improve the user experience of the mobile terminal.

As shown in Fig.7, the present disclosure provides in some embodiments a mobile terminal, including: a to-be-processed content acquisition module 41 configured to receive a content selection instruction from a user through a first interface of the mobile terminal, and acquire to-be-processed content selected by the user in accordance with the content selection instruction; a content processing module 42 configured to receive a content processing instruction about the to-be-processed content from the user, and process the to-be-processed content in accordance with the content processing instruction; an instruction acquisition module 43 configured to acquire a first content pasting instruction from the user through a second interface of the mobile terminal; a first display module 44 configured to display a floating window on the second interface in accordance with the first content pasting instruction, and display the to-be-processed content in the floating window; and a content pasting module 45 configured to paste the to-be-processed content in a pasting region of the second interface.

The instruction acquisition module 43 includes: an operation type acquisition sub-module configured to acquire an operation type of the user for a predetermined region of the second interface; and a first instruction acquisition sub-module configured to, when the operation type is a pressing, double-clicking, or pressing-and-holding operation, look up a predetermined correspondence between the operation types and operation instructions, and acquire an operation instruction corresponding to the pressing, double-clicking, or pressing-and-holding operation as the first content pasting instruction.

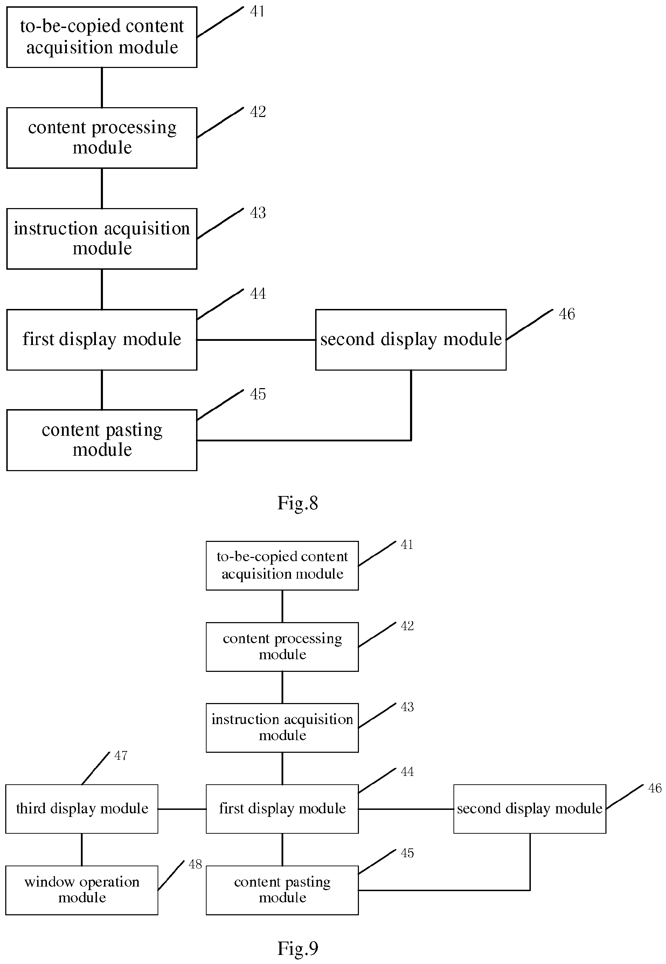

As shown in Fig.8, in order to further improve the user experience, the mobile terminal further includes a second display module 46 configured to display a pasting confirmation button. At this time, the content pasting module 45 includes: an instruction reception sub-module configured to receive a pasting confirmation instruction transmitted by the user through clicking the pasting confirmation button; and a content pasting sub-module configured to paste the to-be-processed content in the pasting region of the second interface in accordance with the pasting confirmation instruction.

In a possible embodiment of the present disclosure, the content pasting module 45 includes: an information transmission sub-module configured transmit a pasting prompt message to the user; and an information processing sub-module configured to receive a pasting prompt response message from the user, and when the to-be-processed content is confirmed to be pasted by the user in accordance with the pasting prompt response message, paste the to-be-processed content in the pasting region of the second interface.

As shown in Fig.9, the mobile terminal further includes: a third display module 47 configured to display a close button; and a window operation module 48 configured to receive a closing instruction transmitted by the user through clicking the close button, and close the floating window in accordance with the closing instruction.

In addition, the instruction acquisition module 43 further includes: a second instruction acquisition sub-module configured to, when the operation type of the user for the predetermined region of the second interface is a clicking operation, look up an operation instruction corresponding to the clicking operation of the user from a predetermined correspondence between the operation types and the operation instructions, and take the acquired operation instruction as a second content pasting instruction. At this time, the content pasting module 45 is further configured to directly paste the to-be-processed content in the pasting region of the second interface in accordance with the second content pasting instruction.

The implementations of the mobile terminal in Fig.7 may refer to those of the above-mentioned method in Fig.1-Fig.6, and thus will not be particularly defined herein.

According to the embodiments of the present disclosure, the user is capable of previewing the to-be-copied content in the floating window, so it is able for the user to firstly determine whether the to-be-processed content is the content that the user really needs according to the to-be-processed content being displayed, which ensures that the to-be-processed content to be pasted meets the user's requirement, and prevent the user from deleting the to-be-processed content or performing an operation such as a copy-and-paste operation or cut-and-paste operation repeatedly on the to-be-processed content, thereby to improve the user experience of the mobile terminal. In addition, the user may directly paste the to-be-processed content by clicking the pasting confirmation button, so it is able to meet the user's operation habit in a better manner, thereby to further improve the user experience of the user terminal.

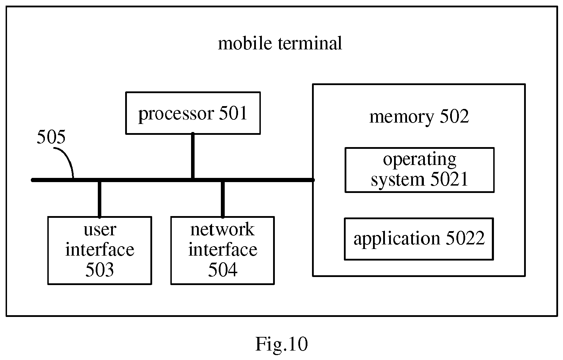

As shown in the block diagram of Fig. 10, the present disclosure further provides in some embodiments a mobile terminal 500 which includes at least one processor 501, a memory 502, at least one network interface 504 and a user interface 503. The components of the mobile terminal 500 are coupled to each other through a bus system 505. It should be appreciated that, the bus system 505 is configured to achieve connection and communication among the components. Apart from a data bus, the bus system 505 may further include a power source bus, a control bus and a state signal bus. For clarification, all these buses are called as the bus system 505 in Fig.10.

The user interface 503 may include a display, a keyboard or a clicking device (e.g., mouse, trackball, touch plate or touch screen).

It should be appreciated that, the memory 502 may be a volatile memory, a nonvolatile memory or both. The nonvolatile memory may be a Read-Only Memory (ROM), a Programmable ROM (PROM), an Erasable PROM (EPROM), an Electrically EPROM (EEPROM) or a flash memory. The volatile memory may be a Random Access Memory (RAM) which serves as an external high-speed cache. Illustratively but not restrictively, the RAM may include Static RAM (SRAM), Dynamic RAM (DRAM), Synchronous DRAM (SDRAM), Double Data Rate SDRAM (DDRSDRAM), Enhanced SDRAM (ESDRAM), Synchronous Link DRAM (SLDRAM) or Direct Rambus RAM (DRRAM). The memory 502 intends to include, but not limited to, the above-mentioned and any other appropriate memories.

In a possible embodiment of the present disclosure, the following elements may be stored in the memory 502: an executable module or data structure, a subset or an extended set thereof, an operating system 5021 and an application 5022.

The operating system 5021 includes various system programs, e.g., a framework layer, a core library layer and a driving layer, so as to implement various basic services and process hardware-based tasks. The application 5022 includes various applications, e.g., a media player and a browser, so as to implement various application services. The program for implementing the above-mentioned method may be included in the application 5022.

In a possible embodiment of the present disclosure, through calling a program or instruction stored in the memory 502, e.g., a program or instruction stored in the application 5022, the processor 501 is configured to: receive a content selection instruction from a user through a first interface of the mobile terminal, and acquire to-be-processed content selected by the user in accordance with the content selection instruction; receive a content processing instruction about the to-be-processed content from the user, and process the to-be-processed content in accordance with the content processing instruction; acquire a first content pasting instruction from the user through a second interface of the mobile terminal; display a floating window on the second interface in accordance with the first content pasting instruction, and display the to-be-processed content in the floating window; and paste the to-be-processed content in a pasting region of the second interface.

The above-mentioned method may be applied to, or implemented by, the processor 501. The processor 501 may be an integrated circuit (IC) having a signal processing capability. During the implementation, the steps for the above method may be completed through an integrated logic circuit of hardware in the processor 501 or instructions in the form of software. The processor 501 may be a general-purpose processor, a Digital Signal Processor (DSP), an Application Specific Integrated Circuit (ASIC), a Field Programmable Gate Array (FPGA) or any other programmable logic element, a discrete gate or transistor logic element, or a discrete hardware assembly, which may be used to implement or execute the methods, steps and logic diagrams in the embodiments of the present disclosure. The general purpose processor may be a microprocessor or any other conventional processor. The steps of the method in the embodiments of the present disclosure may be directly implemented by the decoding processor in the form of hardware, or a combination of hardware and software modules in the decoding processor. The software module may be located in a known storage medium such as a Random Access Memory (RAM), a flash memory, a Read Only Memory (ROM), a Programmable ROM (PROM), an Electrically Erasable PROM (EEPROM), or a register. The storage medium may be located in the memory 502, and the processor 501 may read information stored in the memory 502 so as to implement the steps of the above method through the hardware.

It should be appreciated that, the embodiments of the present disclosure may be implemented by hardware, software, firmware, middleware, microcode or a combination thereof. For the hardware implementation, the processor may include one or more of an ASIC, a DSP, a DSP device (DSPD), a Programmable Logic Device (PLD), an FPGA, a general-purpose processor, a controller, a microcontroller, a microprocessor, any other electronic unit capable of achieving the functions in the present disclosure, or a combination thereof.

For the software implementation, the embodiments of the present disclosure may be implemented through modules capable of achieving features such as a process or a function in the present disclosure. Software codes may be stored in the memory and executed by the processor. The memory may be implemented inside or outside the processor.

In a possible embodiment of the present disclosure, the processor 501 is further configured to display a pasting confirmation button.

In a possible embodiment of the present disclosure, the processor 501 is further configured to receive a pasting confirmation instruction transmitted by the user through clicking the pasting confirmation button, and paste the to-be-processed content in the pasting region of the second interface in accordance with the pasting confirmation instruction.

In a possible embodiment of the present disclosure, the processor 501 is further configured to transmit a pasting prompt message to the user, receive a pasting prompt response message from the user, and when it determines that the to-be-processed content is confirmed to be pasted by the user in accordance with the pasting prompt response message, paste the to-be-processed content in the pasting region of the second interface.

In a possible embodiment of the present disclosure, the processor 501 is further configured to display a close button, receive a closing instruction transmitted by the user through clicking the close button, and close the floating window in accordance with the closing instruction.

The implementation of the mobile terminal 500 may refer to those mentioned above, and thus will not be particularly defined herein.

According to the embodiments of the present disclosure, the user is capable of previewing the to-be-copied content in the floating window, so it is able for the user to firstly determine whether the to-be-processed content is the content that the user really needs according to the to-be-processed content being displayed, which ensures that the to-be-processed content to be pasted meets the user's requirement, and prevent the user from deleting the to-be-processed content or performing an operation such as a copy-and-paste operation or cut-and-paste operation repeatedly on the to-be-processed content, thereby to improve the user experience of the mobile terminal. In addition, the user may directly paste the to-be-copied content by clicking the pasting confirmation button, so it is able to meet the user's operation habit in a better manner, thereby to further improve the user experience of the mobile terminal.

It should be appreciated that, units and steps described in the embodiments of the present disclosure may be implemented in the form of electronic hardware, or a combination of a computer program and the electronic hardware. Whether or not these functions are executed by hardware or software depends on specific applications or design constraints of the technical solution. Different methods may be adopted by a person skilled in the art with respect to the specific applications so as to achieve the described functions, without departing from the scope of the present disclosure.

It should be further appreciated that, for convenience and clarification, operation procedures of the system, device and units described hereinabove may refer to the corresponding procedures in the method embodiment, and thus will not be particularly defined herein.

It should be further appreciated that, the device and method may be implemented in any other ways. For example, the embodiments for the apparatus are merely for illustrative purposes, and the units are provided merely on the basis of their logic functions. During the actual application, some modules or units may be combined together or integrated into another system. Alternatively, some features may be omitted or not executed. In addition, the coupling connection, direct coupling connection or communication connection between the modules or units may be implemented via interfaces, and the indirect coupling connection or communication connection between the modules or units may be implemented in an electrical or mechanical form or in any other form.

The units may be, or may not be, physically separated from each other. The units for displaying may be, or may not be, physical units, i.e., they may be arranged at an identical position, or distributed on a plurality of network elements. Parts or all of the units may be selected in accordance with the practical need, so as to achieve the purpose of the present disclosure.

In addition, the functional units in the embodiments of the present disclosure may be integrated into a processing unit, or the functional units may exist independently, or two or more functional units may be combined together in one unit.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (e.g., a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a ROM, a RAM, a magnetic disk or an optical disk.

## Claims

1. A content processing method for use in a mobile terminal, comprising:
receiving (11) a content selection instruction from a user through a first interface of a first application of the mobile terminal, and acquiring to-be-processed content selected by the user in accordance with the content selection instruction;
receiving (12) a content processing instruction about the to-be-processed content from the user, and processing the to-be-processed content in accordance with the content processing instruction;
acquiring (13) an operation type of the user for a predetermined region of a second interface of a second application, and determining an operation instruction corresponding to the operation type, wherein the determining an operation instruction corresponding to the operation type comprises: when the operation type is double-clicking, or pressing-and-holding by the user in the predetermined region of the second interface, determining that the operation instruction is a first content pasting instruction; and when the operation type is clicking by the user in the predetermined region of the second interface, determining that the operation instruction is a second content pasting instruction;
when the operation instruction is the second content pasting instruction, directly pasting the to-be-processed content in a pasting region of the second interface in accordance with the second content pasting instruction; and
when the operation instruction is the first content pasting instruction, displaying (14) a floating window on the second interface in accordance with the first content pasting instruction, and displaying the to-be-processed content in the floating window; and
pasting (15) the to-be-processed content in the pasting region of the second interface;
wherein subsequent to displaying the floating window on the second interface in accordance with the first content pasting instruction and displaying the to-be-processed content in the floating window, and prior to pasting the to-be-processed content in the pasting region of the second interface, the content processing method further comprises:
displaying a pasting confirmation button in the floating window,
wherein the pasting the to-be-processed content in the pasting region of the second interface comprises:
receiving a pasting confirmation instruction transmitted by the user through clicking the pasting confirmation button; and
pasting the to-be-processed content in the pasting region of the second interface in accordance with the pasting confirmation instruction.

2. The content processing method according to claim 1, wherein the predetermined region of the second interface comprises a region corresponding to a paste button on the second interface, and the paste button is displayed through clicking the pasting region of the second interface.

3. A mobile terminal, comprising:
a to-be-processed content acquisition module (41) configured to receive a content selection instruction from a user through a first interface of a first application of the mobile terminal, and acquire to-be-processed content selected by the user in accordance with the content selection instruction;
a content processing module (42) configured to receive a content processing instruction about the to-be-processed content from the user, and process the to-be-processed content in accordance with the content processing instruction;
an instruction acquisition module (43) configured to acquire an operation type of the user for a predetermined region of a second interface of a second application, and determine an operation instruction corresponding to the operation type, wherein the determining an operation instruction corresponding to the operation type comprises: when the operation type is double-clicking, or pressing-and-holding by the user in the predetermined region of the second interface, determining that the operation instruction is a first content pasting instruction; and when the operation type is clicking by the user in the predetermined region of the second interface, determining that the operation instruction is a second content pasting instruction;
a first display module (44) configured to, when the operation instruction is the first content pasting instruction, display a floating window on the second interface in accordance with the first content pasting instruction, and display the to-be-processed content in the floating window; and
a content pasting module (45) configured to paste the to-be-processed content in the pasting region of the second interface;
a second display module (46) configured to display a pasting confirmation button in the floating window,
the content pasting module (45) comprises:
an instruction reception sub-module configured to receive a pasting confirmation instruction transmitted by the user through clicking the pasting confirmation button; and
a content pasting sub-module configured to paste the to-be-processed content in the pasting region of the second interface in accordance with the pasting confirmation instruction, wherein the content pasting module (45) is further configured to directly paste the to-be-processed content in the pasting region of the second interface in accordance with the second content pasting instruction.

4. The mobile terminal according to claim 3, further comprising:
a third display module (47) configured to display a close button; and
a window operation module (48) configured to receive a closing instruction transmitted by the user through clicking the close button, and close the floating window in accordance with the closing instruction.

5. The mobile terminal according to claim 3, wherein the predetermined region of the second interface comprises a region corresponding to a paste button on the second interface, and the paste button is displayed through clicking the pasting region of the second interface.

## Patentansprüche

1. Inhaltsverarbeitungsverfahren für die Nutzung in einem mobilen Endgerät, umfassend: Empfangen (11) einer Inhaltsauswahlanweisung von einem Nutzer mittels einer ersten Schnittstelle einer ersten Anwendung des mobilen Endgeräts und Erfassen des vom Nutzer ausgewählten zu verarbeitenden Inhalts im Einklang mit der Inhaltsauswahlanweisung;
Empfangen (12) einer Inhaltsverarbeitungsanweisung bezüglich des zu verarbeitenden Inhalts vom Nutzer und Verarbeiten des zu verarbeitenden Inhalts im Einklang mit der Inhaltsverarbeitungsanweisung;
Erfassen (13) eines Vorgangstyps des Nutzers für eine vorgegebene Region einer zweiten Schnittstelle einer zweiten Anwendung und Feststellen einer Vorgangsanweisung entsprechend dem Vorgangstyp, wobei das Feststellen einer Vorgangsanweisung, die dem Vorgangstyp entspricht, Folgendes umfasst: Feststellen, dass es sich bei der Vorgangsanweisung um eine erste Inhaltseinfügeanweisung handelt, wenn der Vorgangstyp ein Doppelklick oder ein Drücken und Halten seitens des Nutzers in der vorgegebenen Region der zweiten Schnittstelle ist, und Feststellen, dass es sich bei der Vorgangsanweisung um eine zweite Inhaltseinfügeanweisung handelt, wenn der Vorgangstyp das Klicken seitens des Nutzers in der vorgegebenen Region der zweiten Schnittstelle ist;
direktes Einfügen des zu verarbeitenden Inhalts in eine Einfügeregion der zweiten Schnittstelle im Einklang mit der zweiten Inhaltseinfügeanweisung, wenn es sich bei der Vorgangsanweisung um die zweite Inhaltseinfügeanweisung handelt, und Anzeigen (14) eines schwebenden Fensters auf der zweiten Schnittstelle im Einklang mit der ersten Inhaltseinfügeanweisung sowie Anzeigen des zu verarbeitenden Inhalts im schwebenden Fenster und
Einfügen (15) des zu verarbeitenden Inhalts in die Einfügeregion der zweiten Schnittstelle, wenn es sich bei der Vorgangsanweisung um die erste Inhaltseinfügeanweisung handelt,
wobei das Inhaltsverarbeitungsverfahren nach dem Anzeigen des schwebenden Fensters auf der zweiten Schnittstelle im Einklang mit der ersten Inhaltseinfügeanweisung und dem Anzeigen des zu verarbeitenden Inhalts im schwebenden Fenster und vor dem Einfügen des zu verarbeitenden Inhalts in die Einfügeregion der zweiten Schnittstelle zudem Folgendes umfasst:
Anzeigen einer Einfügebestätigungsschaltfläche im schwebenden Fenster, wobei das Einfügen des zu verarbeitenden Inhalts in die Einfügeregion der zweiten Schnittstelle Folgendes umfasst: Empfangen einer Einfügebestätigungsanweisung, die vom Nutzer durch Klicken auf die Einfügebestätigungsschaltfläche übermittelt wird, und Einfügen des zu verarbeitenden Inhalts in die Einfügeregion der zweiten Schnittstelle im Einklang mit der Einfügebestätigungsanweisung.

2. Inhaltsverarbeitungsverfahren nach Anspruch 1, wobei die vorgegebene Region der zweiten Schnittstelle eine Region umfasst, die einer Einfügeschaltfläche auf der zweiten Schnittstelle entspricht, und die Einfügeschaltfläche durch Klicken auf die Einfügeregion der zweiten Schnittstelle angezeigt wird.

3. Mobiles Endgerät, umfassend:
ein Modul (41) zum Erfassen des zu verarbeitenden Inhalts, das ausgelegt ist, um eine Inhaltsauswahlanweisung von einem Nutzer mittels einer ersten Schnittstelle einer ersten Anwendung des mobilen Endgeräts zu empfangen und den vom Nutzer ausgewählten zu verarbeitenden Inhalt im Einklang mit der Inhaltsauswahlanweisung zu erfassen;
ein Inhaltsverarbeitungsmodul (42), das ausgelegt ist, um eine Inhaltsverarbeitungsanweisung bezüglich des zu verarbeitenden Inhalts vom Nutzer zu empfangen und den zu verarbeitenden Inhalt im Einklang mit der Inhaltsverarbeitungsanweisung zu verarbeiten;
ein Anweisungserfassungsmodul (43), das ausgelegt ist, um einen Vorgangstyp des Nutzers für eine vorgegebene Region einer zweiten Schnittstelle einer zweiten Anwendung zu erfassen und eine Vorgangsanweisung entsprechend dem Vorgangstyp festzustellen, wobei das Feststellen einer Vorgangsanweisung, die dem Vorgangstyp entspricht, Folgendes umfasst:
Feststellen, dass es sich bei der Vorgangsanweisung um eine erste Inhaltseinfügeanweisung handelt, wenn der Vorgangstyp ein Doppelklick oder ein Drücken und Halten seitens des Nutzers in der vorgegebenen Region der zweiten Schnittstelle ist, und Feststellen, dass es sich bei der Vorgangsanweisung um eine zweite Inhaltseinfügeanweisung handelt, wenn der Vorgangstyp das Klicken seitens des Nutzers in der vorgegebenen Region der zweiten Schnittstelle ist; und ein erstes Anzeigemodul (44), das ausgelegt ist, um ein schwebendes Fenster auf der zweiten Schnittstelle im Einklang mit der ersten Inhaltseinfügeanweisung anzuzeigen und den zu verarbeitenden Inhalt im schwebenden Fenster anzuzeigen, wenn es sich bei der Vorgangsanweisung um die erste Inhaltseinfügeanweisung handelt, und ein Inhaltseinfügemodul (45), das ausgelegt ist, um den zu verarbeitenden Inhalt in die Einfügeregion der zweiten Schnittstelle einzufügen;
ein zweites Anzeigemodul (46), das ausgelegt ist, um eine Einfügebestätigungsschaltfläche im schwebenden Fenster anzuzeigen, wobei das Inhaltseinfügemodul (45) Folgendes umfasst:
ein Anweisungsempfangsuntermodul, das ausgelegt ist, um eine Einfügebestätigungsanweisung, die vom Nutzer mittels Klicken auf die Einfügebestätigungsschaltfläche übermittelt wurde, zu empfangen, und ein Inhaltseinfügeuntermodul, das ausgelegt ist, um den zu verarbeitenden Inhalt in die Einfügeregion der zweiten Schnittstelle im Einklang mit der Einfügebestätigungsanweisung einzufügen, wobei das Inhaltseinfügemodul (45) zudem ausgelegt ist, um den zu verarbeitenden Inhalt direkt in die Einfügeregion der zweiten Schnittstelle im Einklang mit der zweiten Inhaltseinfügeanweisung einzufügen.

4. Mobiles Endgerät nach Anspruch 3, zudem umfassend ein drittes Anzeigemodul (47), das ausgelegt ist, um eine Schließen-Schaltfläche anzuzeigen, und ein Fenstervorgangsmodul (48), das ausgelegt ist, um eine Schließen-Anweisung zu empfangen, die vom Nutzer durch Klicken auf die Schließen-Schaltfläche übermittelt wird, und das schwebende Fenster im Einklang mit der Schließen-Anweisung zu schließen.

5. Mobiles Endgerät nach Anspruch 3, wobei die vorgegebene Region der zweiten Schnittstelle eine Region umfasst, die einer Einfügeschaltfläche auf der zweiten Schnittstelle entspricht, und die Einfügeschaltfläche durch Klicken auf die Einfügeregion der zweiten Schnittstelle angezeigt wird.

## Revendications

1. Procédé de traitement de contenu destiné à être utilisé dans un terminal mobile, comprenant : recevoir (11) une instruction de sélection de contenu provenant d'un utilisateur par l'intermédiaire d'une première interface d'une première application du terminal mobile, et acquérir un contenu à traiter sélectionné par l'utilisateur conformément à l'instruction de sélection de contenu ;
recevoir (12) une instruction de traitement de contenu concernant le contenu à traiter en provenance de l'utilisateur, et traiter le contenu à traiter conformément à l'instruction de traitement de contenu ; acquérir (13) un type d'opération de l'utilisateur pour une région prédéterminée d'une seconde interface d'une seconde application, et déterminer une instruction d'opération correspondant au type d'opération, dans laquelle la détermination d'une instruction d'opération correspondant au type d'opération comprend : lorsque le type d'opération est un double-clic, ou une pression et un maintien par l'utilisateur dans la région prédéterminée de la seconde interface, déterminer que l'instruction d'opération est une première instruction de collage de contenu ; et lorsque le type d'opération est un clic par l'utilisateur dans la région prédéterminée de la seconde interface, déterminer que l'instruction d'opération est une seconde instruction de collage de contenu ;
lorsque l'instruction d'opération est la seconde instruction de collage de contenu, coller directement le contenu à traiter dans une région de collage de la seconde interface conformément à la seconde instruction de collage de contenu ; et lorsque l'instruction d'opération est la première instruction de collage de contenu, afficher (14) une fenêtre flottante sur la seconde interface conformément à la première instruction de collage de contenu, et afficher le contenu à traiter dans la fenêtre flottante ; et coller (15) le contenu à traiter dans la région de collage de la seconde interface ;
dans lequel, après l'affichage de la fenêtre flottante sur la seconde interface conformément à la première instruction de collage de contenu et l'affichage du contenu à traiter dans la fenêtre flottante, et avant le collage du contenu à traiter dans la région de collage de la seconde interface, le procédé de traitement de contenu comprend en outre :
afficher un bouton de confirmation de collage dans la fenêtre flottante, dans lequel le collage du contenu à traiter dans la région de collage de la seconde interface comprend : recevoir une instruction de confirmation de collage transmise par l'utilisateur en cliquant sur le bouton de confirmation de collage ; et
coller le contenu à traiter dans la région de collage de la seconde interface conformément à l'instruction de confirmation de collage.

2. Procédé de traitement de contenu selon la revendication 1, dans lequel la région prédéterminée de la seconde interface comprend une région correspondant à un bouton de collage sur la seconde interface, et le bouton de collage est affiché en cliquant sur la région de collage de la seconde interface.

3. Terminal mobile, comprenant :
un module d'acquisition de contenu à traiter (41) configuré pour recevoir une instruction de sélection de contenu d'un utilisateur par l'intermédiaire d'une première interface d'une première application du terminal mobile, et acquérir un contenu à traiter sélectionné par l'utilisateur conformément à l'instruction de sélection de contenu ;
un module de traitement de contenu (42) configuré pour recevoir une instruction de traitement de contenu concernant le contenu à traiter en provenance de l'utilisateur, et traiter le contenu à traiter conformément à l'instruction de traitement de contenu ;
un module d'acquisition d'instructions (43) configuré pour acquérir un type d'opération de l'utilisateur pour une région prédéterminée d'une seconde interface d'une seconde application, et déterminer une instruction d'opération correspondant au type d'opération, dans lequel la détermination d'une instruction d'opération correspondant au type d'opération comprend :
lorsque le type d'opération est un double-clic, ou une pression et un maintien par l'utilisateur dans la région prédéterminée de la seconde interface,
déterminer que l'instruction d'opération est une première instruction de collage de contenu ; et lorsque le type d'opération est un clic par l'utilisateur dans la région prédéterminée de la seconde interface,
déterminer que l'instruction d'opération est une seconde instruction de collage de contenu ; et un premier module d'affichage (44) configuré pour, lorsque l'instruction d'opération est la première instruction de collage de contenu, afficher une fenêtre flottante sur la seconde interface conformément à la première instruction de collage de contenu, et afficher le contenu à traiter dans la fenêtre flottante ; et un module de collage de contenu (45) configuré pour coller le contenu à traiter dans la région de collage de la seconde interface ;
un second module d'affichage (46) configuré pour afficher un bouton de confirmation de collage dans la fenêtre flottante, le module de collage de contenu (45) comprend :
un sous-module de réception d'instruction configuré pour recevoir une instruction de confirmation de collage transmise par l'utilisateur en cliquant sur le bouton de confirmation de collage ; et un sous-module de collage de contenu configuré pour coller le contenu à traiter dans la région de collage de la seconde interface conformément à l'instruction de confirmation de collage, dans lequel le module de collage de contenu (45) est en outre configuré pour coller directement le contenu à traiter dans la région de collage de la seconde interface conformément à la seconde instruction de collage de contenu.

4. Terminal mobile selon la revendication 3, comprenant en outre :
un troisième module d'affichage (47) configuré pour afficher un bouton de fermeture ; et un module d'opération de fenêtre (48) configuré pour recevoir une instruction de fermeture transmise par l'utilisateur en cliquant sur le bouton de fermeture, et fermer la fenêtre flottante conformément à l'instruction de fermeture.

5. Terminal mobile selon la revendication 3, dans lequel la région prédéterminée de la seconde interface comprend une région correspondant à un bouton de collage sur la seconde interface, et le bouton de collage est affiché en cliquant sur la région de collage de la seconde interface.
